# EUROPEAN PATENT APPLICATION

(11) **EP 4 641 872 A1**
(43) Date of publication of application: **29.10.2025**
(21) Application number: 23906323.3
(22) Date of filing: 27.06.2023
(51) Int. Cl.: H02J 7/00, B60L 1/00, B60L 50/40, B60L 58/22, B60R 16/02

(54) **VEHICLE POWER SUPPLY DEVICE**

(30) Priority: 22.12.2022 JP 2022205291
(71) Applicant: Panasonic Intellectual Property Management Co., Ltd., Kadoma-shi, Osaka 571-0057 (JP)
(72) Inventor: TAKEDA, Noriaki, Kadoma-shi, Osaka 571-0057 (JP)
(74) Representative: Novagraaf International SA
(86) International application number: PCT/JP2023/023781
(87) International publication number: WO 2024/134937

(57) **Abstract**

In the vehicle power supply apparatus, a power storage unit (3) includes a plurality of switches (SW1-SW4) that selectively switch between serial connection or parallel connection of a plurality of capacitors (C1-C3), and a voltage detector unit that measures the end-to-end voltage across both ends of each of the plurality of capacitors (C1-C3). When a voltage detector unit (30) detects, as the end-to-end voltage, a prescribed voltage at which at least one capacitor of the plurality of capacitors (C1-C3) is incapable of discharging further, a controller unit (4) controls the plurality of switches (SW1-SW4) to connect in parallel, and thereby distributes the residual charge of at least one among the plurality of capacitors (C1-C3) to another capacitor, making it possible to supply electric power again to the load without charging again.

## Description

### TECHNICAL FIELD

The present invention relates to a vehicle power supply apparatus.

### BACKGROUND ART

In recent years, electrification of automobiles (hereinafter, referred to as a vehicle) has been promoted in consideration of the environment. The electrification is not limited to the electric power of the vehicle, and the conventional mechanical control is replaced with the electric control for the vehicle control system including the brake, the steering wheel, and the like. In the case of such electric control, when the battery becomes abnormal, not only electric power is lost, but also there is a possibility that the vehicle control system becomes operable and falls into a very dangerous state such that the vehicle cannot be safely stopped.

On the other hand, a vehicle power supply apparatus as an auxiliary power supply for supplying electric power to a vehicle control system at the time of a battery abnormality such as a temporary battery voltage drop or a permanent battery failure state has been proposed (see, for example, Patent Document 1).

### PRIOR ART DOCUMENT

### PATENT DOCUMENT

Patent Document 1: Japanese Patent Laid-open Publication No. JP2020-120464A

### SUMMARY OF THE INVENTION

### PROBLEMS TO BE SOLVED BY THE INVENTION

However, the electric power storage unit used in the vehicle power supply apparatus as described above is configured by connecting a plurality of energy storage apparatus in series, and when even one of the plurality of energy storage apparatus is in a state of a limit of discharge (for example, the electric charge is zero), further discharge cannot be performed even in such a state that charge remains in another energy storage apparatus. That is, although electric charges remain in the entire electric power storage unit, the power supply to the load (for example, a vehicle control system) is terminated without using up the electric charges.

An object of the present disclosure is to provide a vehicle power supply apparatus capable of supplying electric power to a load (for example, a vehicle control system) again by effectively using remaining electric charges even in the vehicle power supply apparatus in which the plurality of energy storage apparatus of the electric power storage unit are unbalanced and discharged, and power supply to the load is disabled in a state in which electric charges remain in other energy storage apparatus due to the energy storage apparatus reaching the discharge limit.

### SOLUTIONS TO THE PROBLEMS

According to one aspect of the present disclosure, there is provided a vehicle power supply apparatus including: a power supply unit that supplies electric power to a load; a power storage unit that supplies electric power in an abnormal state of the power supply unit; a charging circuit configured to charge the electric power storage unit; a voltage converter circuit configured to convert a voltage of the electric power storage unit into a predetermined voltage, and output the voltage to the load; and a controller unit configured to control operations of the electric power storage unit, the charging circuit, and the voltage converter circuit. The electric power storage unit includes: a plurality of capacitors; a plurality of switches that selectively switch between connecting the plurality of capacitors in series and connecting the plurality of capacitors in parallel; and a voltage detector unit configured to measure an end-to-end voltage across each of the plurality of capacitors. The controller unit controls the plurality of switches to be connected in parallel when the voltage detector unit detects, as the end-to-end voltage, a predetermined voltage at which at least one capacitor of the plurality of capacitors is incapable of further discharging, so as to make it possible to distribute a remaining charge of at least one capacitor of the plurality of capacitors to another capacitor and supply electric power to the load again without charging the capacitors again.

### EFFECTS OF THE INVENTION

Therefore, according to the vehicle power supply apparatus according to one aspect of the present disclosure, it is possible to supply electric power to the load (vehicle control system) again by effectively using remaining electric charges even in the vehicle power supply apparatus in which the plurality of energy storage apparatus of the electric power storage unit are unbalanced and discharged, and power supply to the load is disabled in a state in which electric charges remain in other energy storage apparatus due to the energy storage apparatus reaching the discharge limit. As a result, it is possible to secure electric power after electric power loss, and initial diagnosis of a defective portion can be performed quickly.

### BRIEF DESCRIPTION OF THE DRAWINGS

[Fig. 1] Fig. 1 is a block diagram showing a configuration example of a vehicle power supply apparatus according to a first embodiment.
[Fig. 2] Fig. 2 is a block diagram showing a configuration example of a power storage unit 3 of Fig. 1.
[Fig. 3] Fig. 3 is a flowchart showing electric power storage control processing executed by a controller unit 4 of Fig. 1.
[Fig. 4] Fig. 4 is a block diagram showing a configuration example of a power storage unit 3A according to a first modified embodiment.
[Fig. 5] Fig. 5 is a block diagram showing a configuration example of a vehicle power supply apparatus according to a second embodiment.
[Fig. 6] Fig. 6 is a block diagram showing a configuration example of a vehicle power supply apparatus according to a third embodiment.
[Fig. 7] Fig. 7 is a flowchart showing electric power storage control processing executed by a vehicle ECU 8 and the controller unit 4 of Fig. 6.
[Fig. 8] Fig. 8 is a block diagram showing a configuration example of a vehicle power supply apparatus according to a fourth embodiment.
[Fig. 9] Fig. 9 is a block diagram showing a configuration of a vehicle power supply apparatus according to a conventional example.
[Fig. 10] Fig. 10 is a flowchart showing electric power storage control processing executed by a controller unit 104 of Fig. 9.

### DETAILED DESCRIPTION

Hereinafter, embodiments and modified embodiments according to the present invention will be described with reference to the drawings. Note that the same or similar components are denoted by the same reference numerals.

### FINDINGS OF INVENTORS

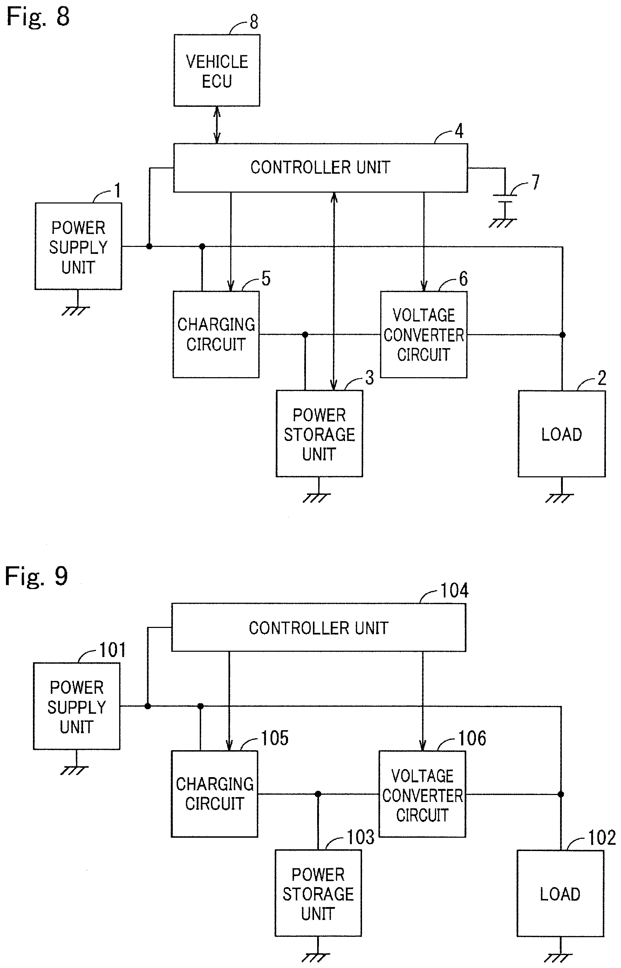

Fig. 9 is a block diagram showing a configuration of a vehicle power supply apparatus according to a conventional example. Referring to Fig. 9, the vehicle power supply apparatus according to the conventional example includes a power supply unit 101, a load 102, a power storage unit 103, a controller unit 104, a charging circuit 105, and a voltage conversion circuit 106. In this case, for example, an electric double layer capacitor is used as an energy storage device that stores charge as an auxiliary power supply, and a plurality of electric double layer capacitors are connected to configure the electric power storage unit 103.

In the vehicle power supply apparatus configured as described above, during normal operation, electric power necessary for the load 102 is supplied from the power supply unit 101 including a battery, and the electric power storage unit 103 is charged from the power supply unit 101 via the charging circuit 105 in preparation for an abnormal state of the battery. When an abnormal state occurs in the battery, electric charge stored in the electric power storage unit 103 is supplied to the load 102 via the voltage conversion circuit 106, so that electric power necessary for vehicle control can be supplied as much as the electric power storage unit 103 can supply charge, and the vehicle can be safely stopped without losing vehicle control.

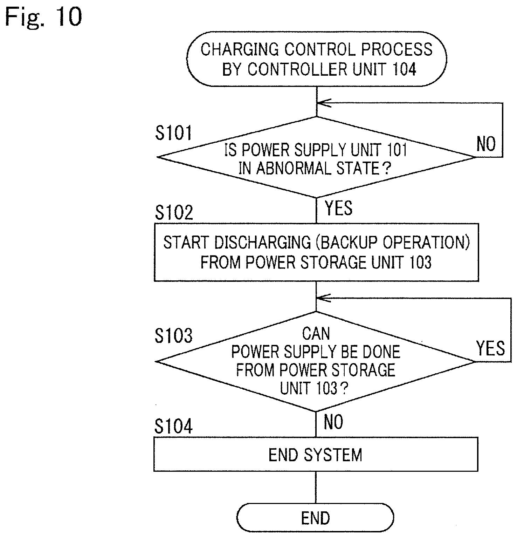

Fig. 10 is a flowchart showing electric power storage control processing executed by the controller unit 104 of Fig. 9. Referring to Fig. 10, a case where an abnormal state occurs in the power supply unit 101 including a battery is assumed.

Referring to Fig. 10, first of all, when an abnormal state of the power supply unit 101 is sensed (YES in S101), discharge (backup operation) for supplying DC electric power from the electric power storage unit 103 to the load 102 is started (S102). When the charge of the electric power storage unit 103 is reduced by the discharge and further power supply becomes impossible (YES in S103), the system of the controller unit 104 is normally ended (S104) to stop the function before becoming uncontrollable.

The electric power storage unit 103 used in the vehicle power supply apparatus according to the conventional example shown in Fig. 9 is configured by connecting a plurality of energy storage apparatus in series. When even one of the plurality of energy storage apparatus is in a state of a limit of discharge (for example, charge is 0), further discharge cannot be performed even in a state where charge remains in another energy storage apparatus. That is, although electric charges remain in the entire electric power storage unit 103, the power supply to the load 2 (for example, a vehicle control system) is terminated without using up the electric charges.

The inventors have devised, as described above, a vehicle power supply apparatus capable of supplying electric power to a load (vehicle control system) again by effectively using remaining electric charges even in the vehicle power supply apparatus in which the plurality of energy storage apparatus of the electric power storage unit are unbalanced and discharged, and power supply to the load is disabled in a state in which electric charges remain in other energy storage apparatus due to the energy storage apparatus reaching the discharge limit.

### FIRST EMBODIMENT

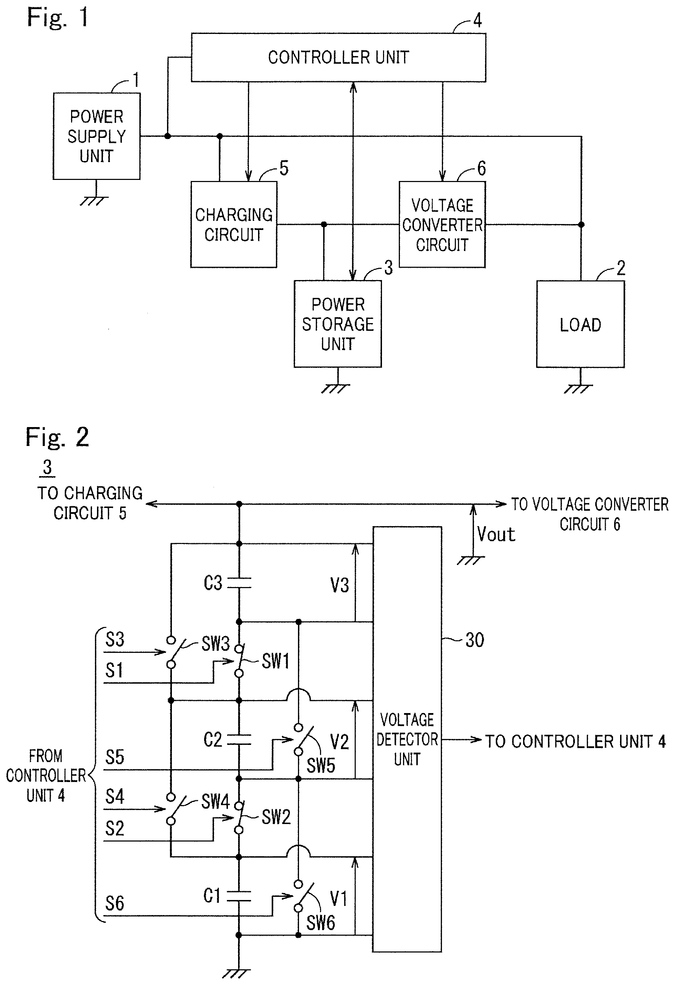

Fig. 1 is a block diagram showing a configuration example of a vehicle power supply apparatus according to a first embodiment. Referring to Fig. 1, the vehicle power supply apparatus according to the first embodiment includes a power supply unit 1, a load 2, a power storage unit 3, a controller unit 4, a charging circuit 5, and a voltage conversion circuit 6. In this case, the power supply unit 1 includes, for example, a secondary battery such as a battery, and the load 2 is, for example, a load such as a vehicle control system. In addition, an electric double layer capacitor, for example, is used as an energy storage device that stores charge as an auxiliary power supply, and the plurality of electric double layer capacitors are connected in series, for example, to constitute the electric power storage unit 3.

In the vehicle power supply apparatus configured as described above, DC electric power is supplied from the power supply unit 1 to the load 2 during normal operation of the vehicle. In addition, the controller unit 4 charges the electric power storage unit 3 by operating the charging circuit 5 in preparation for an abnormal state of the power supply unit 1 including a battery, for example. When the power supply unit 1 is in an abnormal state such as a voltage drop or a failure, the controller unit 4 senses the voltage drop and supplies DC electric power from the electric power storage unit 3 to the load 2. At this time, voltage conversion is performed using the voltage conversion circuit 6 so as to generate a voltage necessary for the load 2 as necessary.

Fig. 2 is a block diagram showing a configuration example of the electric power storage unit 3 of Fig. 1.

Referring to Fig. 2, the electric power storage unit 3 is connected between the charging circuit 5 and the voltage conversion circuit 6. The electric power storage unit 3 includes:
(1) capacitors C1 to C3 that store electric charges;
(2) switches SW1 to SW6 that selectively switch between connection of the capacitors C1 to C3 in series and connection of the capacitors C1 to C3 in parallel under the control of the controller unit 4;
(3) a voltage detector unit 30 that measures end-to-end voltages V1 to V3 of the capacitors C1 to C3 and the output voltage Vout (= V1 + V2 + V3; It refers to a voltage between one end of the capacitor C3 on the charging circuit 5 side and the ground terminal), and outputs a measurement result to the controller unit 4.

In this case, the controller unit 4 controls on or off of the switches SW1 to S6 using the control signals S1 to S6, respectively. In addition, the capacitors C1 to C3 are connected in series when the switches SW1 and SW2 are turned on and the switches SW3, SW4, SW5, and SW6 are turned off (hereinafter, referred to as "initial state of the switches SW1 to SW6") during the normal operation and during the backup operation when the abnormal state of the power supply unit 1 occurs.

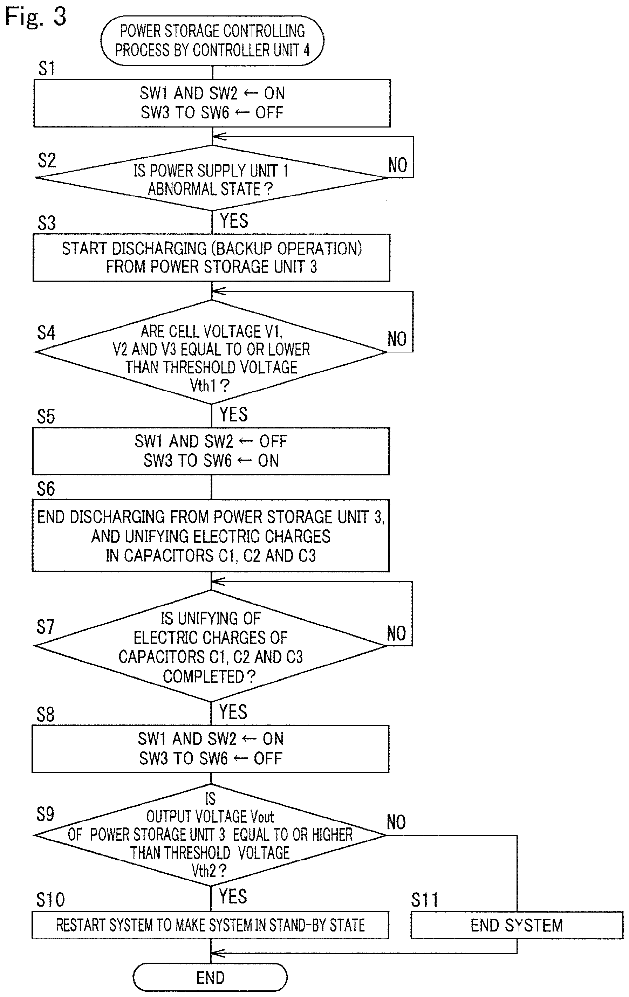

Fig. 3 is a flowchart showing electric power storage control processing executed by the controller unit 4 of Fig. 1.

In step S1 of Fig. 3, first of all, after the switches SW1 to SW6 are set to the initial states, when an abnormal state occurs in the power supply unit 1 (YES in S2), power supply (backup operation) from the electric power storage unit 3 to the load 2 is started (S3). Then, the charge amount charged in the capacitors C1 to C3 by the power supply from the electric power storage unit 3 decreases. In this case, when any one of the capacitors C1 to C3 has no charge, it is not possible to supply any more charge even in a state where charge remains in the other capacitors. Therefore, the voltage detector unit 30 monitors the charge amount remaining in each of the capacitors C1 to C3 by measuring the voltage of each of the capacitors C1 to C3.

When the controller unit 4 detects a state in which the end-to-end voltage across one or more of the capacitors C1 to C3 drops to or below the threshold voltage Vth1 by the voltage monitoring by the voltage detector unit 30 (YES in S4), the controller unit 4 stops the power supply from the electric power storage unit 3, turns off the switches SW1 and SW2, and turns on the switches SW3 to SW6 (hereinafter, referred to as a "parallel connection state of the capacitors C1 to C3 by the switches SW1 to SW6") (S5). Thus, the electric charges remaining in the capacitors C1 to C3 is distributed to the capacitors C1 to C3, making it possible to equalize the charge amounts among the capacitors C1 to C3 (S6). That is, it is possible to supply a charge again by giving a charge to the capacitor from which the charge has been removed.

The threshold voltage Vth1 in step S4 is set as follows. In the vehicle power supply apparatus, in a case where the power supply unit 1 fails and the electric power storage unit 3 also falls into an abnormal state in which charge cannot be supplied, the controller unit 4 loses its own power supply and enters a state in which control for equalizing the electric charges of the capacitors C1 to C3 of the electric power storage unit 3 cannot be performed. In the first embodiment, the threshold voltage Vth1 of each of the capacitors C1 to C3 is set in a state where surplus electric power for performing charge equalization processing is left so as not to fall into such an abnormal state. That is, the threshold voltage Vth1 is set as the end-to-end voltage across each of the capacitors C1 to C3 in the previous stage to the abnormal state.

Next, the controller unit 4 determines whether or not the equalization of the electric charges of the capacitors C1 to C3 has been completed by the absolute value of the respective voltage differences between the respective end-to-end voltages V1 to V3 of the capacitors C1 to C3 becoming equal to or less than the predetermined threshold voltage difference ΔV by the voltage monitoring by the voltage detector unit 30 (S7), and proceeds to step S8 when YES, and returns to step S7 when NO. In step S8, by returning the switches SW1 to SW6 to their initial states, the connection of the capacitors C1 to C3 is returned to the series connection state. Next, it is determined whether the output voltage Vout of the electric power storage unit 3 is equal to or higher than the threshold voltage Vth2 (S9).

The threshold voltage Vth2 in step S9 is set as follows. The threshold voltage Vth2 is set to the output voltage Vout sufficient to operate the system of the load 2 in the normal state after the charge equalization of the capacitors C1 to C3 is completed.

When YES in step S9, the process proceeds to step S10, whereas when NO, the process proceeds to step S11. In step S10, as the state in which the DC electric power can be supplied to the load 2 (standby state) is set, the electric power storage control processing is ended. In this case, when the user turns on the ignition, power supply to the load 2 is started, and initial diagnosis such as investigation of the cause of the abnormal state of the vehicle can be promptly performed. On the other hand, in a case where the voltage of the electric power storage unit 3 is equal to or lower than the threshold voltage Vth2 (NO in S9), the charge that can be supplied to the load 2 is insufficient, the restart is not possible, the system of the controller unit 4 is terminated (S11), and the electric power storage control processing is terminated.

According to the vehicle power supply apparatus of the first embodiment configured as described above, even in the vehicle power supply apparatus in which the charge amounts of the capacitors C1 to C3, which are the plurality of energy storage apparatus of the electric power storage unit 3, are unbalanced and discharged, and the electric power cannot be supplied to the load 2(for example, a vehicle control system) in a state where the charge remains in the other capacitors due to the capacitor reaching the discharge limit, the remaining charge can be effectively used to supply the electric power to the load 2 again. As a result, it is possible to secure electric power after electric power loss, and initial diagnosis of a defective portion can be performed quickly.

In the first embodiment described above, the case where the number of capacitors of the electric power storage unit 3 is three has been described, but the present disclosure is not limited thereto, and the number of capacitors may be two or more. The same applies to the following embodiments and modified embodiments.

### FIRST MODIFIED EMBODIMENT

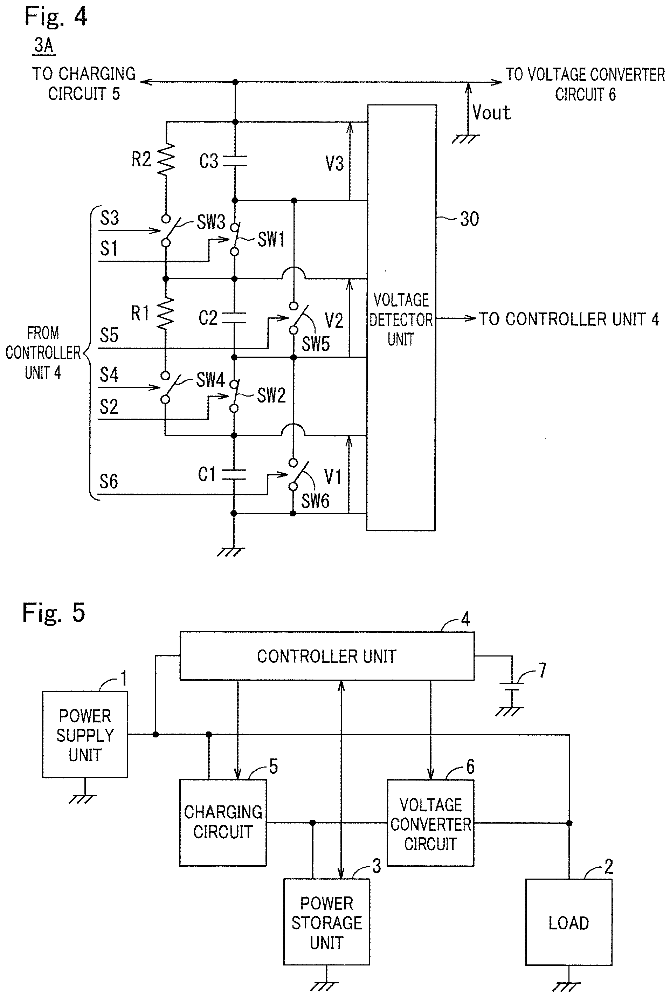

Fig. 4 is a block diagram showing a configuration example of a power storage unit 3A according to a first modified embodiment. The vehicle power supply apparatus of Fig. 4 is different from the vehicle power supply apparatus of Fig. 1 in the following points.
(1) Instead of the electric power storage unit 3, a power storage unit 3A is provided, and the electric power storage unit 3A includes the following resistors R1 to R2 for lash current prevention.
   (A) The resistor R1 is inserted between the switches SW3 and SW4.
   (B) The resistor R2 is inserted between the switch SW3 and one end of the capacitor C3 on the charging circuit 5 side.

Differences will be described below.

In the vehicle power supply apparatus configured as described above, when the plurality of capacitors C1 to C3 having a voltage potential difference are connected, a large current instantaneously flows, causing abnormal heat generation, fusing of wiring, and the like. The current amount can be reduced by connecting the resistors R1 and R2 in order to prevent such a lash current. Here, the capacitors C1 to C3 are, for example, electric double layer capacitors.

In the first modified embodiment described above, the resistors R1 and R2 are further included, but the present disclosure is not limited thereto, and a resistor connected in parallel to at least one of the plurality of capacitors may be connected when the switches SW3 and SW4 are turned on. Note that the first modified embodiment and this modified embodiment may be applied to other embodiments and modified embodiments.

### SECOND EMBODIMENT

Fig. 5 is a block diagram showing a configuration example of a vehicle power supply apparatus according to a second embodiment. The vehicle power supply apparatus of Fig. 5 is different from the vehicle power supply apparatus of Fig. 1 in the following points.
(1) Another power supply unit 7 is connected to the controller unit 4. Here, another power supply unit 7 is, for example, a battery or a secondary battery such as a lithium ion.

Differences will be described below.

In the vehicle power supply apparatus of Fig. 5, in a case where the power supply unit 1 fails and the electric power storage unit 3 also falls into an abnormal state in which charge cannot be supplied, the controller unit 4 loses its own power supply and enters a state in which control for equalizing the electric charges of the capacitors C1 to C3 of the electric power storage unit 3 cannot be performed. In the first embodiment, the threshold voltage Vth1 of each of the capacitors C1 to C3 is set in a state where surplus electric power for performing charge equalization processing is left so as not to fall into such a state.

However, since the original purpose of the electric power storage unit 3 is to supply DC electric power for ensuring safety in an abnormal state of the power supply unit 1, the charge cannot be used up for the original purpose in the first embodiment. In view of such a problem, in the second embodiment, by separately connecting another power supply unit 7 to the controller unit 4, the controller unit 4 can supply DC electric power from another power supply unit 7. Therefore, even in a case where the power supply unit 1 fails and the electric power storage unit 3 also falls into an abnormal state in which electric charges cannot be supplied, it is possible to perform the charge equalization processing of the capacitors C1 to C3. Further, the vehicle power supply apparatus according to the second embodiment has the same functions and effects as those of the first embodiment.

### THIRD EMBODIMENT

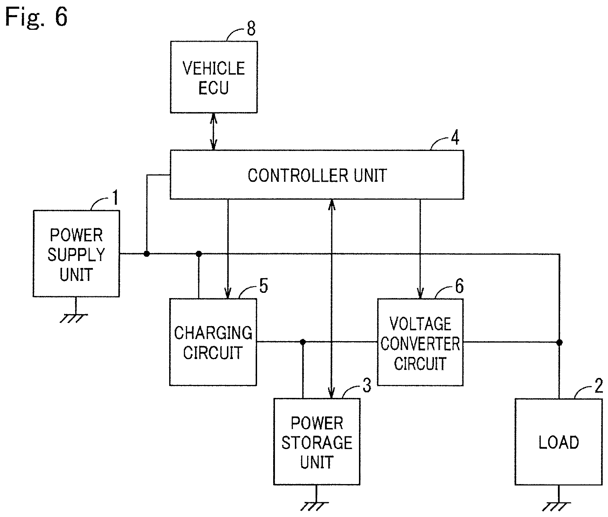

Fig. 6 is a block diagram showing a configuration example of a vehicle power supply apparatus according to a third embodiment. The vehicle power supply apparatus of Fig. 6 is different from the vehicle power supply apparatus of Fig. 1 in the following points.
(1) A vehicle electronic controller unit (ECU) 8 is connected to the controller unit 4.

Differences will be described below.

In the vehicle power supply apparatus of Fig. 6, the controller unit 4 communicates with the vehicle ECU 8 via a predetermined communication line. The vehicle ECU 8 is a control apparatus that controls the entire vehicle, and the vehicle power supply apparatus also operates under the control of the vehicle ECU 8. In the first and second embodiments, the vehicle power supply apparatus can be controlled to be restarted according to a determination unique to the vehicle power supply apparatus. However, depending on a failure state of the vehicle, there may be a case where there is a risk such as fire when energization is performed again. Information on all blocks related to the vehicle is collected in the vehicle ECU 8, and the vehicle power supply apparatus can be controlled based on determination from the situation of the entire vehicle in the above-described state.

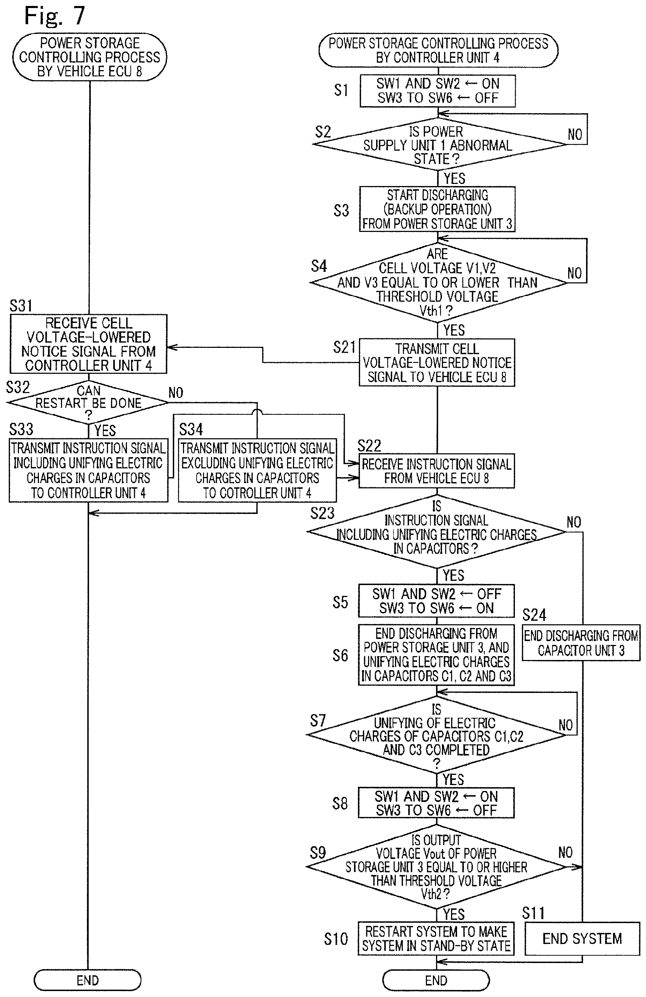

Fig. 7 is a flowchart showing electric power storage control processing executed by the vehicle ECU 8 and the controller unit 4 of Fig. 6.

Referring to Fig. 7, the controller unit 4 similarly executes the processing in steps S1 to S3 of Fig. 3. That is, in step S3, the backup operation from the electric power storage unit 3 is started, and the electric charges of the capacitors C1 to C3 are discharged. When detecting a state in which the end-to-end voltage across one or more of the capacitors C1 to C3 drops to or below the threshold voltage Vth1 (YES in S3), the controller unit 4 transmits a cell voltage drop notification signal to the vehicle ECU 8.

In response to this, the vehicle ECU 8 receives the cell voltage drop notification signal from the controller unit 4 (S31), and when determining that the restart is possible from the vehicle state (YES in S32), transmits an instruction signal including equalization of the capacitor charge to the controller unit 4 (S33). On the other hand, when determining that the restart is impossible from the vehicle state (NO in S 32), the vehicle ECU 8 transmits an instruction signal not including equalization of the capacitor charge to the controller unit 4 (S34).

In response to the instruction signal from the vehicle ECU 8, the controller unit 4 determines whether or not the instruction signal is an instruction signal including equalization of capacitor charges (S23), and proceeds to step S5 when YES, and proceeds to step S24 when NO. After step S5, the controller unit 4 executes processing (S5 to S11) similar to the control processing of Fig. 3, and ends the electric power storage control processing. On the other hand, in step S24, the discharge from the electric power storage unit 3 is terminated, the system of the controller unit 4 is terminated, and then the electric power storage control processing is terminated.

As described above, according to the third embodiment, it is possible to determine whether or not to restart according to the state of the vehicle by communication between the controller unit 4 and the vehicle ECU 8, leading to prevention of secondary disaster. The vehicle power supply apparatus according to the third embodiment has the same functions and effects as those of the vehicle power supply apparatus according to the first or second embodiment.

### FOURTH EMBODIMENT

Fig. 8 is a block diagram showing a configuration example of a vehicle power supply apparatus according to a fourth embodiment. The vehicle power supply apparatus of Fig. 8 is different from the vehicle power supply apparatus of Fig. 1 in the following points.
(1) Both the vehicle ECU 8 according to the third embodiment and the other power supply unit 7 according to the second embodiment are provided.

Differences will be described below.

In the vehicle power supply apparatus according to the fourth embodiment configured as described above, even in a case where the power supply unit 1 fails and the electric power storage unit 3 also falls into an abnormal state in which charge cannot be supplied, it is possible to perform charge equalization processing on the capacitors C1 to C3, and it is possible to control the vehicle power supply apparatus according to the determination of the vehicle ECU 8. In addition, the vehicle power supply apparatus according to the fourth embodiment has the same functions and effects as those of the vehicle power supply apparatus according to the first to third embodiments.

### MODIFIED EMBODIMENTS

In the above embodiments and modified embodiments, the power supply unit 1 and another power supply unit 7 are, for example, a battery that supplies DC electric power, but the present disclosure is not limited thereto, and AC electric power may be converted into DC electric power and supplied. In addition, an ACDC converter may be provided on the electric power receiving side by supplying AC electric power.

### INDUSTRIAL APPLICABILITY

The vehicle power supply apparatus according to the present invention is useful as an in-vehicle auxiliary power supply in a quick and safe recovery process from the occurrence of abnormality in the power supply unit.

### REFERENCE SIGNS LIST

- 1: Power supply unit
- 2: Load
- 3: Power storage unit
- 4: Controller unit
- 5: Charging circuit
- 6: Voltage converter circuit
- 7: Power supply unit
- 8: Vehicle ECU
- 30: Voltage detector unit
- C1 to C3: Capacitor
- SW1 to SW6: Switch
- R1 to R2: Resistor

## Claims

1. A vehicle power supply apparatus comprising:
a power supply unit that supplies electric power to a load;
a power storage unit that supplies electric power in an abnormal state of the power supply unit;
a charging circuit configured to charge the electric power storage unit;
a voltage converter circuit configured to convert a voltage of the electric power storage unit into a predetermined voltage, and output the voltage to the load; and
a controller unit configured to control operations of the electric power storage unit, the charging circuit, and the voltage converter circuit,
wherein the electric power storage unit includes:
a plurality of capacitors;
a plurality of switches that selectively switch between connecting the plurality of capacitors in series and connecting the plurality of capacitors in parallel; and
a voltage detector unit configured to measure an end-to-end voltage across each of the plurality of capacitors, and
wherein the controller unit controls the plurality of switches to be connected in parallel when the voltage detector unit detects, as the end-to-end voltage, a predetermined voltage at which at least one capacitor of the plurality of capacitors is incapable of further discharging, so as to make it possible to distribute a remaining charge of at least one capacitor of the plurality of capacitors to another capacitor and supply electric power to the load again without charging the capacitors again.

2. The vehicle power supply apparatus as claimed in claim 1,
wherein the controller unit executes equalization of charge amounts stored in the plurality of capacitors by controlling the plurality of switches to be connected in parallel.

3. The vehicle power supply apparatus as claimed in claim 2,
wherein the controller unit equalizes the charge amounts according to an instruction from a vehicle ECU.

4. The vehicle power supply apparatus as claimed in claim 2, further comprising:
another power supply unit connected to the controller unit, the another power supply unit supplying electric power to the load,
wherein the controller unit receives power supply from the another power supply unit when equalizing the charge amounts.

5. The vehicle power supply apparatus as claimed in claim 1,
wherein the plurality of capacitors are electric double-layer capacitors.

6. The vehicle power supply apparatus as claimed in any one of claims 1 to 5,
wherein the electric power storage unit further includes a resistor connected in parallel to at least one of the plurality of capacitors, the resistor being configured to reduce a lash current flowing through the plurality of capacitors when the plurality of switches is switched over.
